# EUROPEAN PATENT SPECIFICATION

(11) **EP 0 278 955 B1**
(45) Date of publication and mention of the grant of the patent: **27.10.1993**
(21) Application number: 87904596.1
(22) Date of filing: 29.06.1987
(51) Int. Cl.: H04N 7/18

(54) **MOTION DETECTION APPARATUS EMPLOYING INFORMATION CONTAINED IN THE FREQUENCY SPECTRUM OF A TELEVISION SIGNAL**
BEWEGUNGSDETEKTIONSGERÄT UNTER VERWENDUNG VON IM FREQUENZSPEKTRUM EINES FERNSEHSIGNALS ENTHALTENER INFORMATION
APPAREIL DE DETECTION D'UN MOUVEMENT UTILISANT DES INFORMATIONS CONTENUES DANS LE SPECTRE DE FREQUENCE D'UN SIGNAL DE TELEVISION

(30) Priority: 01.07.1986 GB 8616040; 15.07.1986 GB 8617179
(43) Date of publication of application: 24.08.1988
(73) Proprietor: BURLE TECHNOLOGIES, INC., Wilmington, DE 19801 (US)
(72) Inventor: MEGEID, Mohamed, Magdy, Abdel, CH-8047 Zurich (CH)
(74) Representative: Ebbinghaus, Dieter, Dipl.-Ing.
(86) International application number: US8701501
(87) International publication number: WO8800422

(56) References cited:
- EP-A- 0 055 540
- US-A- 4 617 589
- US-A- 4 641 186

## Description

This invention relates to motion detection in a television picture that is contained in a television signal and more particularly to a motion detector which employs information included in the frequency spectrum of the television signal.

The prior art is aware of the fact that a television signal contains information which is relative to the motion in the television picture content. Such techniques have been used in intrusion detection or video surveillance systems where it is required to be able to detect motion by examination of a video signal. A known method employed in the prior art compares a real time image with a delayed image from a field or frame store. In any event, such systems require a relatively expensive frame store or memory which stores the video signal of an entire picture frame or field. The video signal that contains the picture information of a subsequent picture frame is compared with the stored video signal and the result of such comparison provides a signal indicative of motion.

Essentially, such systems operate on the fact that motion causes the content of a pixel in a present video signal to be different from the corresponding pixel in the stored frame. In any event, as one can imagine, these systems have difficulties in that an expensive frame store is required. A further difficulty with such systems is that they are affected by changes in illumination which can cause false alarms.

It is also known that motion information is contained in the frequency spectrum of a television signal, see, for example, US-A-4 641 186, published 3/2/1987.

As described in that patent, there is a motion detector for detecting motion in a picture contained in a television signal which includes a filter that extracts a portion of the frequency spectrum of the television signal. The amplitude of the side bands of the television signal in this portion of the frequency spectrum is indicative of motion in the picture scene. The signal from the filter is coupled to a peak detector that produces a motion indicative signal. The amplitude of the motion signal is proportional to the absolute value of the amplitude of the sidebands in this portion of the spectrum.

As one can ascertain from the above patent, the motion detector as described is particularly useful when such television apparatus includes a line store memory for adapting the interlaced signal for display in a non-interlaced scanning format. As is known, the adaptation to a non-interlaced scanning format is provided to reduce certain conditions that are caused by displaying a picture using the interlaced scanning format at the television receiver.

It should be apparent to those skilled in the art that there are many additional applications, apart from surveillance, where it is required to be able to detect motion by examination of a video signal. There are also systems used which employ digital video signals. These signals are processed by computer techniques to achieve picture recognition. In any event, the systems require extensive compression techniques to accommodate the high data rates of a television camera and utilize complicated computer programs to process data.

Similar observations apply for the apparatus known from EP-A-0 055 540 disclosing spectral analysis and demodulation of spectral components caused by some perturbation in a video signal.

In view of the above, it is indicated that the apparatus employed with such detection schemes should be economical, easy to implement and be reliable in operation. In this manner, the television signal can be adequately employed to detect motion and, hence, act in conjunction with an intrusion detection system or other system to indicate the presence of motion.

According to the invention this object is solved by the motion detector apparatus described in claim 1.

Preferred embodiments and further developments of the apparatus are described in claims 2 to 13.
FIG. 1 illustrates a part of the spectrum of a television signal which covers the range up to 20 kHz;
FIG. 2A illustrates a spectrum of the fundamental component of the field scanning rate and two associated harmonics;
FIG. 2B illustrates the field scanning rate spectrum, as affected by motion;
FIG. 3A illustrates the field scanning rate for a stationary picture while FIG. 3B shows the field scanning rate for a picture having motion depicting 1 Hz sideband components due to such motion;
FIG. 4 shows the frequency response of a filter utilized in conjunction with this invention;
FIG. 5 shows a simple block diagram of a motion detector according to this invention;
FIG. 6 shows a detailed block diagram of a motion detector employed in this invention;
FIG. 7 shows a series of timing diagrams depicting the outputs at various points designated in conjunction with FIG. 6;
FIG. 8 shows pertinent timing waveforms depicting the outputs of the various circuit modules of in FIG. 6 in regard to motion and no motion conditions; and
FIG. 9 is an actual circuit schematic diagram of a motion detector, as for example depicted in FIG. 6.

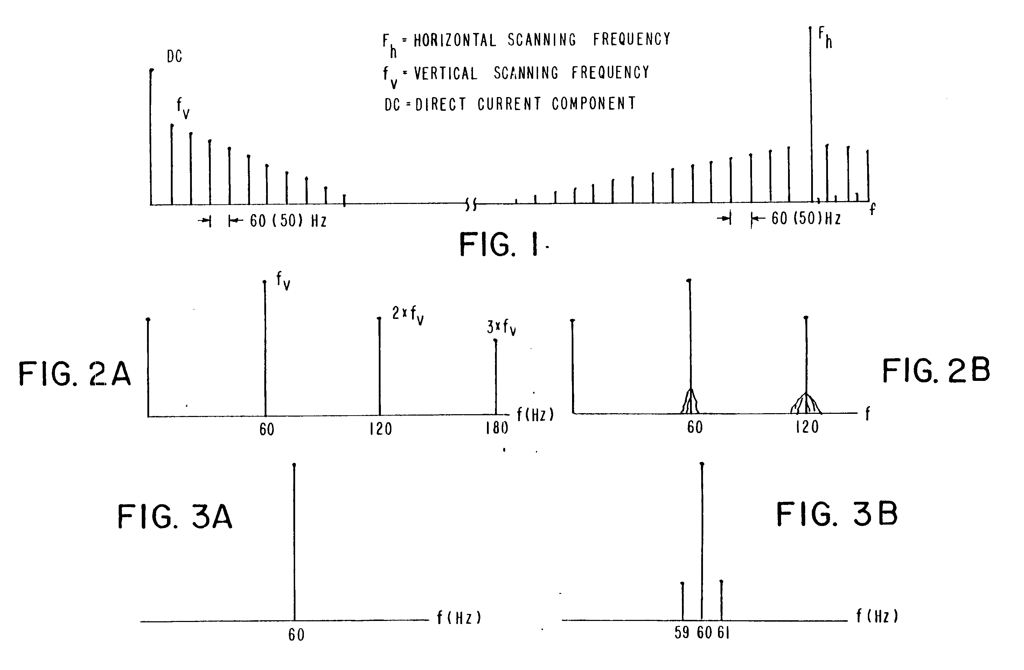

Referring to FIG. 1 there is shown a schematic diagram illustrating a part of the spectrum of a television signal which covers the range up to 20 kHz. It is well known that the spectrum of a television signal for a stationary picture consists of a series of components at harmonics of the horizontal and vertical scanning frequencies. In FIG. 1 the horizontal scanning frequency is represented by the term fₕ whereas the vertical scanning frequency is represented by the term fᵥ. In any event, the components of major magnitude are the DC component, the field frequency components and the components of the line frequency and its harmonics.

As seen in FIG. 1, surrounding each line frequency harmonic is a cluster of components each separated from the next by an interval equal to the field scanning frequency. In FIG. 1 the field scanning frequency or vertical scanning frequency is designated as 60 Hz for the NTSC system and (50) Hz for the PAL system.

Referring to FIG. 2A there is shown the fundamental component of the field scanning rate fᵥ and two of its harmonics designated as 2Xfᵥ and 3Xfᵥ. As can be seen from FIG. 2A, one again is concerned with the NTSC system wherein the field scanning rate fᵥ is at 60 Hz with the second harmonic at 120 Hz and the third harmonic at 180 Hz. As one can ascertain from FIG. 2A, the amplitudes of the harmonics have constant values depending on the scene content. However, when motion is present the spectral components contain additional sidebands due to the change of information from one field to the next. Essentially, the field spectral component is amplitude modulated by motion in the televised scene as shown, for example, in FIG. 2B.

For purposes of further explanation, let us assume that one sees a dark grey raster having a narrow horizontal white bar that is in constant motion between the top and bottom of the television picture. If the bar is moving at a speed of two picture heights per second then the bar will only have moved 1/30th of a picture height (525/60 standard), between successive vertical scans and will return to its starting position and direction of motion after one second.

By referring to FIG. 3A and 3B, one can determine that the spectrum of the resulting video signal will be characterized by having 1 Hz sidebands due to this motion. FIG. 3A essentially shows the fundamental component of the vertical sweep frequency without motion, while FIG. 3B shows the fundamental component of the vertical sweep frequency with motion and with the 1 Hz sideband components that are due to the motion. In general, the amplitude and spread of the motion sidebands will depend on the relative size and speed of the moving area. However, the above example shows that motion of practical significance always produces very low frequency sidebands on either side of the field scanning rate.

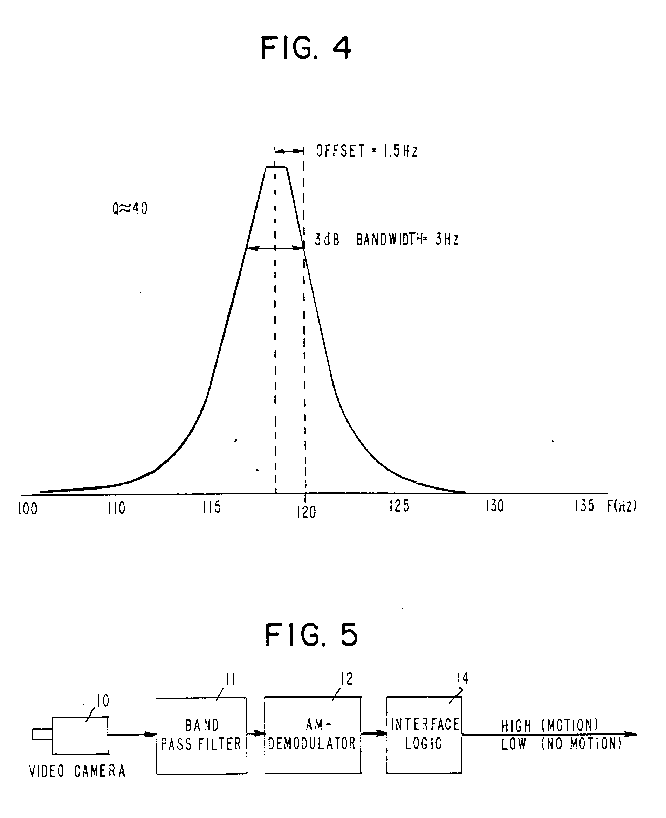

Referring to FIG. 4 there is shown a typical band pass characteristic of a filter which can be utilized to detect motion by responding to an harmonic of the field scanning rate or the vertical sweep frequency. As seen in FIG. 4 the filter basically has a Q equal to 40. Essentially the filter is offset from the second harmonic of the field scanning rate by 1.5 Hz as a typical example. The filter has a 3 db bandwidth which is approximately equal to 3 Hz and the characteristics of the filter are shown clearly in FIG. 4. It is, of course, understood that one can implement the filter characteristics shown in FIG. 4 by many conventional techniques, including the use of operational amplifiers employing RC selective filter circuits and many other filter techniques. It is, therefore, indicated that one skilled in the art could easily implement a filter having the characteristics depicted in FIG. 4.

It is clear that motion can be detected by using a narrow bandpass filter having the bandpass characteristics shown in FIG. 4. As indicated the bandwidth of the filter is about 3 Hz but bandwidths between 3-5 Hz will operate as well. The filter basically has a center frequency located near the second harmonic (120 Hz) of the vertical scanning rate. The second harmonic is utilized due to the fact that there would be less disturbance from power supply hum at this frequency than would occur if the actual scanning frequency of 60 Hz were employed.

In any event, the bandpass center frequency is selected at an integral multiple, n, of the vertical scanning frequency.

As one can ascertain from FIG. 4, the center frequency of the filter is offset by approximately 1-2 Hz from the vertical scanning harmonic to emphasize the motion components with respect to the main fixed signal component. As seen from FIG. 4, the particular offset selected is 1.5 Hz.

Referring to FIG. 5, there is shown a simple block diagram of a system which employs the above-noted effects to detect motion. Essentially, the video camera 10 supplies a television signal which is applied to the input of the bandpass filter 11 having the frequency response depicted in FIG. 4. The television camera 10 is set up to monitor an area under surveillance and hence provides a television signal indicative of the picture content of the area being monitored. The output of the bandpass filter 11 will be a 120 Hz sine wave having a typical amplitude of about 40 mV peak to peak for a typical scene being monitored by the camera 10. The output of the bandpass filter 11 is coupled to the input of an AM demodulator 12. The AM demodulator is a typical amplitude demodulator, many examples of which exist in the prior art. The effect of motion, as indicated above, results in amplitude modulation of the 120 Hz sine wave which serves as a carrier frequency. This modulation is detected by the AM demodulator 12. The output of the AM demodulator 12 is applied to the input of an interface logic circuit 14 which will be more thoroughly described. As seen, the output of the interface logic circuit 14 will provide a high signal or a first output for the presence of motion and will provide a low signal or a second output indicative of no motion. It is, of course, understood that care must be taken in regard to the circuit implementation due to the extremely small amplitudes of motion information that exists relative to the carrier frequency.

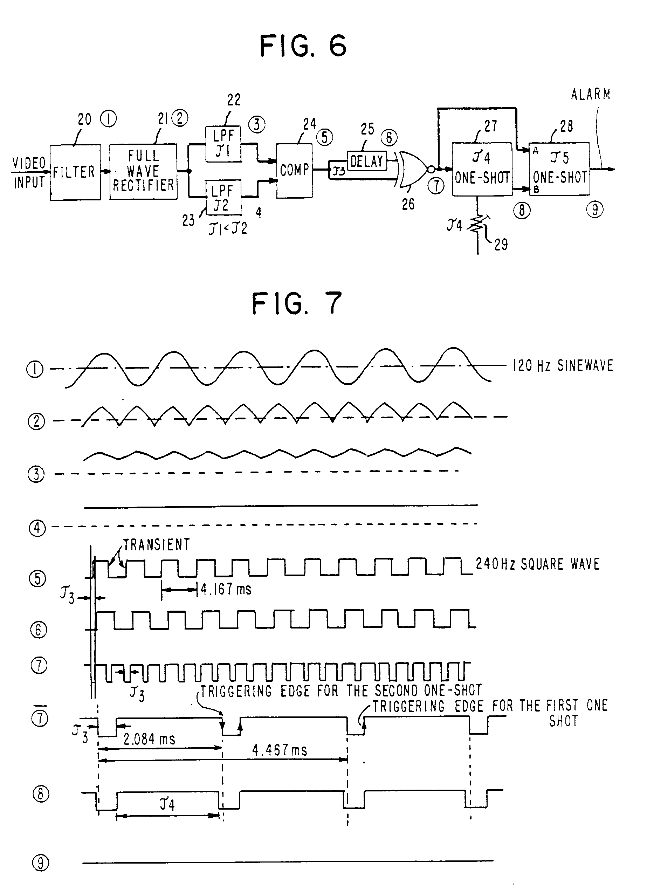

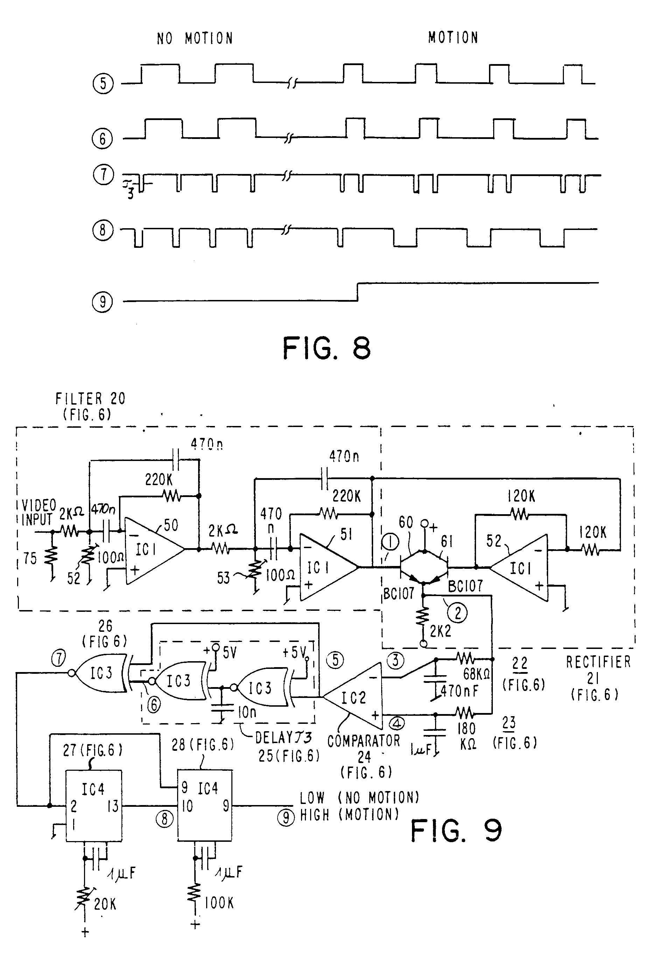

Referring to FIG. 6 there is shown a block diagram of a motion detector which operates according to the above-described principles. It is noted at the outset that FIG. 6 will be explained in conjunction with the wave forms depicted in FIG. 7.

FIG. 7 depicts the various wave forms indicated by the encircled numerals as, for example, 1 through 9 shown on the block diagram of FIG. 6. In this manner, FIG. 7 depicts the various waveforms and their properties as developed by the circuitry depicted in FIG. 6.

The video input signal from a camera or other device is applied to the input of bandpass filter 20. It is again indicated that filter 20 has the frequency response as shown in FIG. 4. The filter 20 will provide, at an output, the sinusoidal signal which essentially is at a frequency of 120 Hz. As indicated above, the amplitude of the sinusoidal signal emanating from filter 20 and depicted in FIG. 7-1, has a constant value which magnitude depends on the scene content. If motion occurs, the sine wave at the output of filter 20 will be amplitude modulated. Motion can then be detected by responding to the envelope of this modulated signal. Thus, as shown in FIG. 6, the output of the filter 20 is directed to an input of a full wave rectifier or bridge rectifier 21. The output of the bridge rectifier 21 is shown in FIG. 7-2. The output of the full wave rectifier 21 is directed respectively to the inputs of a first and a second low pass filter as 22 and 23. The low pass filter 22 has a shorter time constant than the low pass filter 23. In this manner low pass filter 22 is able to follow the modulated envelope. The output of the low pass filter 22 is shown in FIG. 7-3. As one can ascertain from FIG. 7-3, the output of the low pass filter 22 contains some 240 Hz ripple due to the shorter time constant. In any event, the output of low pass filter 23 is shown in FIG. 7-4. As one can ascertain, due to the fact that the time constant of low pass filter 23 is longer, it suppresses the modulation but essentially follows the DC value of the rectified signal as shown in FIG. 7-4.

The signals at the output of each low pass filter are coupled to respective inputs of a comparator circuit 24. The comparator 24 produces a signal at its output which is a 240 Hz square wave signal as shown in FIG. 7-5. With no motion, as seen from Fig. 7-5, the square wave output from comparator 24 has a duty cycle of about 50%. If motion occurs, the duty cycle changes or the signal at the output of comparator 24, becomes a pulse width modulated signal.

There is an extreme advantage in using the two filter method. Namely, by employing low pass filters 22 and 23 the following operation occurs. The low pass filter 23 is used to provide a DC reference level for the signal emanating from filter 22. Essentially the signal output of low pass filter 23, having the longer time constant, is used as the slicing level for the signal output from low pass filter 22. The reason that this technique is preferable is in this manner the duty cycle of the comparator output signal is independent of the amplitude of the sine wave carrier signal which signal is the resultant signal obtained from a stationery picture. Because the slicing level is automatically adapted by filter 23 having the longer time constant, one then provides a comparator output signal which is relatively independent of the sine wave amplitude for a stationary picture. The use of the dual low pass filters as 22 and 23 will also compensate for any changes due to temperature drift. In any event, the duty cycle of the comparator output signal is extremely sensitive to any change in amplitude of the sine wave carrier signal which results from motion. This occurs because the slicing level or reference level emanating from the low pass filter 23 is too slow to track the change in carrier amplitude due to motion. Hence, the output of the comparator 24 essentially can be used as an indication of motion based on the change of the duty cycle of its output waveform. In any event, one still requires the system to provide a go, no go output. Hence, the system must provide an output which either says there is motion or there is not motion. Thus, the output of the comparator is applied to a first input of an exclusive NOR gate 26. One input to the exclusive NOR gate 26 is applied directly from the output of the comparator 24 while the other input from the comparator 24 is applied through a delay circuit 25. The output of the delay circuit is shown in FIG. 7-6 while the output of the exclusive NOR gate 26 is shown in FIG. 7-7.

The delay circuit 23 provides a delay (T₃) and is implemented by utilizing a series connection of logic gates. The delay T₃ is typically longer than 40 nanoseconds (ns) due to the fact that the circuitry, as will be shown, employs TTL logic. This logic has speed limitations. In any event, the maximum value of the delay is also limited by the 240 Hz signal used in this circuit. In practice, a value of 500 ns is reasonable. As indicated, the output signal from the exclusive NOR gate 26 is shown in Fig. 7-7. Immediately beneath Fig. 7-7 there is shown an expanded diagrammatic representation of this signal to indicate the triggering edges for first and second one shots designated by reference numerals 27 and 28 respectively.

The output signal from the exclusive NOR gate 26 results from detection of the transients of the square wave signal output from the comparator 24. This involves detecting when the signal goes low to high or high to low. As indicated, the wave form of FIG. 7-7 has below it an expanded diagram showing the edges which trigger the respective one shots 27 and 28. Thus, as seen, the signal from the output of the exclusive NOR gate 26 operates to trigger the one shot 27 via a transition from negative to positive. The output of one shot 27 is shown in FIG. 7-8. The output of the one shot 27 is applied to the B input of the one shot 28 while the A input of one shot 28 receives an input signal from the output of the exclusive NOR gate 26. The one shot 28 is connected so that it can only be triggered by the negative going edge (the transition from positive to negative) of the signal applied to its input A. If the signal at the input B is high then one shot 28 can be triggered. In any event, if the input B is low then one shot 28 cannot be triggered and it will have an output which will always be in a low state, as for example shown in FIG. 7-9. This state is indicative of no motion. It is noted that the time constant of one shot 27 is chosen to have a value which is just shorter than (2.084 ms - T₃). This value can be adjusted for by means of potentiometer 9. In this case, one shot 28 cannot be triggered because the falling edge occurs always at a time when the other input is low. Therefore, the output is in a stable low state with no motion, as indicated by wave form 7-9.

Referring to FIG. 8 there is shown timing diagrams designated again by encircled reference numerals 5, 6, 7, 8 and 9 which correspond to the encircled reference numerals of FIG. 6 and FIG. 7. The diagram of FIG. 8 shows on the left hand side the various outputs as described above (FIG. 7) for no motion and at the right hand side the various diagrams indicative of motion. Hence, as one can see from FIG. 8-5, the output of comparator 24, during the presence of motion, changes from a square wave having a 50% duty cycle to a pulse width modulated wave. In this manner the delayed signal at the output of delay 25 is also shown in FIG. 8-6 and essentially corresponds to the signal at the output of the comparator as delayed by the delay T3.

The waveform shown in FIG. 8-7 depicts the output of the exclusive NOR gate 26 for no motion (left) and then for motion (right). As one can ascertain from FIG. 8-7 the number of pulses at the output increases for the presence of motion as the duty cycle changes. The wave form shown in FIG. 8-8 depicts the output of the one shot 27 both for no motion and motion and the waveform of FIG. 9 shows how the output of one shot 28 transforms from a low value to a high value indicative of motion detection. Essentially, as one can determine from FIG. 8 and from the above-noted description of FIGS. 6 and 7, what occurs during the presence of motion is as follows. Due to the mismatch in the slicing level applied to the comparator for motion, the output signal from the comparator is pulse width modulated (8-5 and 8-6). When the pulse width changes the positive going edges approach each other reaching a point where they begin to trigger the one shot 27. Once this occurs, the one shot 28 can also be triggered because the signal at its input B is now high when the negative going edge at the input A arrives. The time constant of the second one shot must be longer than 2.084 miliseconds so that it can be retriggered. As long as motion takes place, the output of the one shot 28 remains in the high condition. This output, being high, can then be utilized to activate an alarm as indicated in FIG. 6.

Referring to FIG. 9, there is shown a detailed circuit schematic of the motion detector depicted in the block diagram form of FIG. 6. Each of the representative modules, such as the filter 20, the rectifier 21 and other associated modules of FIG. 6, have been designated by the same reference numerals. In any event, the circuit shown in FIG. 9 incorporates the actual components as well as component values necessary to implement the circuit operation and structure depicted in FIG. 6. Essentially, as one can ascertain from FIG.9, the active filter portion consists of two similar stages, each employing an operational amplifier designated by IC-1 and further referenced by reference numerals 50 and 51. The configuration of the operational amplifiers 50 and 51 operating in a band pass configuration is well known. The frequency response of the filter, consisting of the two operational amplifiers 50 and 51, and their associated components can be adjusted by adjusting the potentiometers as 52 and 53. It is further noted that in FIG. 9 all component values have been designated by suitable component notations on the figure.

The rectifier circuit, which is circuit 21 of FIG. 6, contains two transistors 60 and 61, each being a BC 107, having their emitters and collector electrodes connected together and receiving inputs to the base electrodes. The filter output signal emanating from the output of operational amplifier 51 is applied to the base of transistor 60 directly and is applied to the base of transistor 61 via an operational amplifier circuit 52. The circuit 52 is of a unity gain configuration and, therefore, operates as an inverter. Hence, during the positive half of the sine wave one transistor conducts while the other one remains in cutoff. During the negative half of the sine wave the conducting transistor goes into cutoff and the other transistor conducts. This sequence of operation continues. In this manner, a rectified signal appears at the common emitter output of both transistors, which is further indicated by the encircled reference numeral 2 which corresponds to FIG. 7-2.

A CMOS exclusive OR gate arrangement is employed to produce the delay as delay 25 of FIG. 6. The output of the first gate in the delay circuit is loaded by a 10 NF capacitor to increase the gate delay. As indicated above, the time constant associated with the delay must be long enough to be accepted by the one shot 27. For each of the one shots a TTL integrated circuit is selected because of its improved temperature stability. In any event, as indicated in FIG. 9, the IC's utilized are as follows: IC-1 is an RCA CA 084 integrated circuit; IC-2 is an RCA CA 311 integrated circuit; IC-3 is an RCA CD 4077 integrated circuit; and IC-4 is a Texas Instrument 74LS/23 integrated circuit. Thus, as one can ascertain from the above description, the circuit employed utilizes conventional integrated circuit components which are available as off-the-shelf components. In any event, the circuit operates to detect motion by means of detecting the amplitude of sideband frequencies at a harmonic of the vertical sweep frequency.

As indicated, the above-noted description involved the use of the second harmonic of the vertical sweep frequency, namely 120 Hz. In any event, it should be apparent to those skilled in the art that one could utilize the third harmonic at 180 Hz or any suitable harmonic. It is also understood that if one guarded against power supply hum, or power supply interference, one can employ the techniques described above, directly at the vertical sweep frequency, namely 60 cycles for the NTSC system or 50 Hz for the PAL system.

## Claims

1. A motion detector apparatus of the type employing information contained in the frequency spectrum of a television signal used for providing a television picture, which frequency spectrum for a stationary television picture consists of a series of components at harmonics of the vertical and horizontal scanning frequencies and wherein during motion in said television picture said series of components contain additional sidebands due to said motion, comprising:
band pass filter means (11; 20) responsive to said television signal and having a center frequency located relatively at an integral multiple, n, of said vertical scanning frequency, wherein n is a positive integer, and having a bandwidth which is narrow as compared to the value of said center frequency to provide at an output of said filter (11; 20) a relatively constant value sinusoidal signal at said center frequency for a television signal having no motion associated therewith and wherein said sinusoidal signal is modulated in amplitude during motion; and
means (12, 14; 22 - 28) responsive to said signal at the output of said filter means for detecting said modulation indicative of said motion and for providing an output signal upon detection.

2. The motion detector apparatus according to Claim 1 wherein said integral multiple n is two wherein said center frequency of said bandpass filter (11; 20) is located relatively at twice said vertical scanning frequency.

3. The motion detector apparatus according to Claim 1 wherein said bandwidth of said filter (11; 20) is between 3 and 5 Hz.

4. The motion detector apparatus according to Claim 2 wherein said center frequency of said bandpass filter (11; 20) is offset from twice said vertical scanning frequency by an offset value of between 1 and 2 Hz.

5. The motion detector apparatus according to Claim 1 wherein said vertical scanning frequency is 60 Hz for an NTSC television signal.

6. The motion detector apparatus according to Claim 1 wherein said vertical scanning frequency is 50 Hz for a PAL television signal.

7. The motion detector apparatus according to Claim 1, comprising:
filtering means (21, 22, 23) coupled to the output of said band pass filter means (20) and operative to provide at a first output a first signal (3) indicative of modulation on said sinusoidal signal and operative to provide at a second output a second signal (4) indicative of the DC content of said modulated sinusoidal signal,
comparator means (24) having a first input coupled to said first output (3) of said filtering means and having a second input coupled to said second output (4) of said filtering means, wherein said second signal (4) provides a slicing level for said first signal (3) to cause said comparator (24) to provide a fixed duty cycle output signal for a stationary television picture signal and a varying duty cycle output signal for a television picture signal having motion, whereby said varying duty cycle signal is indicative of motion.

8. The motion detector apparatus according to Claim 7 further including indicator means (25, 26) coupled to said comparator and operative to detect said varying duty cycle waveform for providing an alarm output.

9. The motion detector apparatus according to Claim 8 wherein said indicator means includes an OR gate (NOR 26) having one input coupled to the output of said comparator (24) via a delay (25) and having another input coupled directly to said comparator output (5) to provide at an output a series of pulses spaced according to said duty cycle from said comparator (24) and logic means (27, 28) responsive to a given pulse spacing indicative of motion to provide said alarm output.

10. The motion detector apparatus according to Claim 9 wherein said logic means includes a first one shot (27) having a trigger input coupled to the output of said OR gate (26) and operative to trigger when said pulse signal goes from a first to a second state to provide an output pulse of a given duration, a second one shot (28) having one input coupled to the output of said OR gate (26) and another input coupled to the output of said first one shot to provide an output pulse only when said first one shot is providing an output during a transition in said pulse signal in a direction opposite to that of said first one shot (27).

11. The motion detector apparatus according to Claim 7 wherein said filtering means includes rectifier means (21) coupled to the output of said band pass filter means (20) to provide at an output a rectified signal and a first low pass filter (22) having a first time constant and having an input coupled to said output of said rectifier means (21) for providing at an output said first output signal (3) and a second low pass filter (23) having a longer time constant than said first low pass filter and having an input coupled to the output of said band pass filter means (20) to provide at an output said second output signal.

12. The motion detector apparatus according to Claim 9 or 10 wherein said OR gate is an exclusive NOR gate (26).

13. The motion detector apparatus according to Claim 1 wherein said integral multiple of said vertical scanning frequency is twice said scanning frequency.

## Patentansprüche

1. Bewegungsdetektor, der die im Frequenzspektrum eines Fernsehsignals zur Darstellung eines Fernsehbildes enthaltene Information ausnutzt, wobei das Frequenzspektrum für ein stationäres Fernsehbild aus einer Reihe von Komponenten bei Harmonischen der vertikalen und horizontalen Abtastfrequenz besteht, und wobei während einer Bewegung im Fernsehbild die Reihe von Komponenten infolge der Bewegung zusätzliche Seitenbänder umfaßt, mit: Bandpaßfiltereinrichtungen (11; 20), die auf das Fernsehsignal ansprechen und eine Mittenfrequenz haben, die relativ an einem integralen Vielfachen n der vertikalen Abtastfrequenz liegt, wobei n eine positive ganze Zahl ist, und mit einer Bandbreite, die verglichen mit dem Wert der Mittenfrequenz schmal ist, so daß an einem Ausgang des Filters (11; 20) ein Sinussignal mit relativ konstantem Wert bei der Mittenfrequenz für ein Fernsehsignal erzeugt wird, dem keine Bewegung zugeordnet ist, und wobei die Amplitude des Sinussignals bei einer Bewegung moduliert wird und
einer auf das Signal am Ausgang der Filtereinrichtung ansprechende Einrichtung (12, 14; 22-28) zum Erfassen der die Bewegung anzeigenden Modulation und zur Bereitstellung eines Ausgangssignals bei Erfassung.

2. Bewegungsdetektor nach Anspruch 1, wobei das integrale Vielfache n gleich 2 ist und die Mittenfrequenz des Bandpaßfilters (11; 20) relativ an der doppelten vertikalen Abtastfrequenz liegt.

3. Bewegungsdetektor nach Anspruch 1, wobei die Bandbreite des Filters (11; 20) zwischen 3 und 5 Hz liegt.

4. Bewegungsdetektor nach Anspruch 2, wobei die Mittenfrequenz des Bandpaßfilters von der doppelten vertikalen Abtastfrequenz um einen Wert zwischen 1 und 2 Hz verschoben ist.

5. Bewegungsdetektor nach Anspruch 1, wobei die vertikale Abtastfrequenz für ein NTSC-Fernsehsignal 60 Hz beträgt.

6. Bewegungsdetektor nach Anspruch 1, wobei die vertikale Abtastfrequenz für ein PAL-Fernsehsignal 50 Hz beträgt.

7. Bewegungsdetektor nach Anspruch 1, mit
an den Ausgang der Bandpaßfiltereinrichtung (20) angeschlossenen Filtereinrichtungen (21, 22, 23), die an einem ersten Ausgang ein erstes Signal (3) abgeben, das die Modulation des Sinussignals anzeigt, und die an einem zweiten Ausgang ein zweites Signal (4) abgeben, das den Gleichgehalt des modulierten Sinussignals anzeigt,
einer Komparatoreinrichtung (24) mit einem ersten Eingang, der an den ersten Ausgang (3) der Filtereinrichtung angeschlossen ist, und mit einem an den zweiten Ausgang (4) der Filtereinrichtung angeschlossenen zweiten Eingang, wobei das zweite Signal einen gleitenden Pegel für das erste Signal (3) bereitstellt, so daß der Komparator (24) für ein stationäres Fernsehbildsignal ein Ausgangssignal mit festem Betriebszyklus und für ein Bewegung enthaltendes Fernsehbildsignal ein Ausgangssignal mit veränderlichem Betriebszyklus bereitstellt, wobei das Signal mit veränderlichem Betriebszyklus eine Bewegung anzeigt.

8. Bewegungsdetektor nach Anspruch 7, ferner mit einer an den Komparator angeschlossenen Indikatoreinrichtung (25, 26), die zur Bereitstellung eines Alarm-Ausgangssignals das Signal mit veränderlichem Betriebszyklus erfaßt.

9. Bewegungsdetektor nach Anspruch 8, dadurch **gekennzeichnet**, daß die Indikatoreinrichtung ein ODER-Gatter (NOR 26) aufweist, dessen erster Eingang über eine Verzögerungsstufe (25) an den Ausgang des Komparators (24) und dessen zweiter Ausgang direkt an den Komparatorausgang (5) angeschlossen ist, so daß an einem Ausgang eine Reihe von Impulsen bereitgestellt wird, die entsprechend dem Betriebszyklus vom Komparator (24) in Abständen voneinander liegen, und eine Logikeinrichtung (27, 28), die auf einen gegebenen Impulsabstand anspricht, der die Bewegung anzeigt, so daß ein Alarm-Ausgangssignal bereitgestellt wird.

10. Bewegungsdetektor nach Anspruch 9, wobei die Logikeinrichtung einen ersten, monostabilen Multivibrator (27) mit einem Triggereingang aufweist, der an den Ausgang des ODER-Gatters (26) angeschlossen ist und triggert, wenn das Impulssignal von einem ersten in einen zweiten Zustand übergeht, so daß ein Ausgangsimpuls einer gegebenen Dauer abgegeben wird, sowie einen zweiten, monostabilen Multivibrator (28), dessen erster Eingang an den Ausgang des ODER-Gatters (28) und dessen zweiter Eingang an den Ausgang des ersten monostabilen Multivibrators angeschlossen ist, so daß nur dann ein Ausgangsimpuls erzeugt wird, wenn der erste monostabile Multivibrator während eines Überganges im Impulssignal in einer Richtung entgegengesetzt der des ersten, monostabilen Multivibrators (27) ein Ausgangssignal abgibt.

11. Bewegungsdetektor nach Anspruch 7, wobei die Filtereinrichtung eine Gleichrichtereinrichtung (21) aufweist, die an den Ausgang der Bandpaßfiltereinrichtung (20) angeschlossen ist, so daß an einem Ausgang ein gleichgerichtetes Signal abgegeben wird, sowie ein erstes Tiefpaßfilter (22) mit einer ersten Zeitkonstante und einem an den Ausgang der Gleichrichtereinrichtung (21) angeschlossenen Eingang zur Bereitstellung des ersten Ausgangssignals (3) an dem Ausgang, und ein zweites Tiefpaßfilter (23) mit einer Zeitkonstante, die länger ist als die des ersten Tiefpaßfilters, mit einem an den Ausgang der Bandpaßfiltereinrichtung (20) angeschlossenen Eingang zur Abgabe des zweiten Ausgangssignals an einem Ausgang.

12. Bewegungsdetektor nach Anspruch 9 oder 10, wobei das ODER-Gatter ein exklusives NOR-Gatter (26) ist.

13. Bewegungsdetektor nach Anspruch 1, wobei das integrale Vielfache der vertikalen Abtastfrequenz das Doppelte der Tastfrequenz ist.

## Revendications

1. Appareil détecteur de mouvement du type utilisant des informations contenues dans le spectre de fréquences d'un signal de télévision utilisé pour fournir une image de télévision, lequel spectre de fréquences pour une image de télévision fixe consiste en une série de composantes à des harmoniques des fréquences de balayage vertical et horizontal, et dans lequel pendant le mouvement dans ladite image de télévision ladite série de composantes contient des bandes latérales supplémentaires du fait dudit mouvement, comprenant :
un moyen de filtre passe-bande (11 ; 20) réagissant audit signal de télévision et ayant une fréquence centrale située relativement à un multiple entier, n, de ladite fréquence de balayage vertical, dans lequel n est un nombre entier positif, et ayant une bande passante qui est étroite par rapport à la valeur de ladite fréquence centrale pour fournir sur une sortie dudit filtre (11 ; 20) un signal sinusoïdal de valeur relativement constante à ladite fréquence centrale pour un signal de télévision auquel aucun mouvement n'est associé et dans lequel ledit signal sinusoïdal est modulé en amplitude pendant un mouvement ; et
des moyens (12, 14 ; 22 à 28) réagissant audit signal à la sortie dudit moyen de filtre pour détecter ladite modulation représentative dudit mouvement, et pour fournir un signal de sortie lors de la détection.

2. Appareil détecteur de mouvement selon la revendication 1, dans lequel ledit multiple entier n est deux, dans lequel ladite fréquence centrale dudit filtre passe-bande (11 ; 20) est située relativement à deux fois ladite fréquence de balayage vertical.

3. Appareil détecteur de mouvement selon la revendication 1, dans lequel ladite bande passante dudit filtre (11 ; 20) est entre 3 et 5 Hz.

4. Appareil détecteur de mouvement selon la revendication 2, dans lequel ladite fréquence centrale dudit filtre passe-bande (11 ; 20) est décalée de deux fois ladite fréquence de balayage vertical, d'une valeur de décalage située entre 1 et 2 Hz.

5. Appareil détecteur de mouvement selon la revendication 1, dans lequel ladite fréquence de balayage vertical est de 60 Hz pour un signal de télévision NTSC.

6. Appareil détecteur de mouvement selon la revendication 1, dans lequel ladite fréquence de balayage vertical est de 50 Hz pour un signal de télévision PAL.

7. Appareil détecteur de mouvement selon la revendication 1, comprenant :
un moyen de filtrage (21, 22, 23) connecté à la sortie dudit moyen de filtre passe-bande (20) et servant à fournir sur une première sortie un premier signal (3) représentatif de la modulation sur ledit signal sinusoïdal, et servant à fournir sur une seconde sortie un second signal (4) représentatif de la teneur en courant continu dudit signal sinusoïdal modulé,
un moyen comparateur (24) ayant une première entrée connectée à ladite première sortie (3) dudit moyen de filtrage et ayant une seconde entrée connectée à ladite seconde sortie (4) dudit moyen de filtrage, dans lequel ledit second signal (4) fournit un seuil de comparaison pour ledit premier signal (3) pour amener ledit comparateur (24) à fournir un signal de sortie à rapport cyclique fixe pour un signal d'image de télévision fixe et un signal de sortie à rapport cyclique variable pour un signal d'image de télévision ayant un mouvement, ledit signal à rapport cyclique variable étant alors représentatif d'un mouvement.

8. Appareil détecteur de mouvement selon la revendication 7, comprenant en outre un moyen indicateur (25, 26) connecté audit comparateur et servant à détecter ladite forme d'onde à rapport cyclique variable pour fournir une sortie d'alarme.

9. Appareil détecteur de mouvement selon la revendication 8, dans lequel ledit moyen indicateur comprend une porte OU (NI 26) ayant une entrée connectée à la sortie dudit comparateur (24) par l'intermédiaire d'un circuit-retard (25) et ayant une autre entrée directement connectée à ladite sortie (5) du comparateur pour fournir sur une sortie une série d'impulsions espacées selon ledit rapport cyclique venant dudit comparateur (24) et un moyen logique (27, 28) réagissant à un intervalle donné entre impulsions, représentatif d'un mouvement, pour fournir ladite sortie d'alarme.

10. Appareil détecteur de mouvement selon la revendication 9, dans lequel ledit moyen logique comprend une première bascule monostable (27) ayant une entrée de déclenchement connectée à la sortie de ladite porte OU (26) et servant au déclenchement lorsque ledit signal impulsionnel passe d'un premier à un second état pour fournir une impulsion de sortie d'une durée donnée, une seconde bascule monostable (28) ayant une entrée connectée à la sortie de ladite porte OU (26) et une autre entrée connectée à la sortie de ladite première bascule monostable pour ne fournir une impulsion de sortie que lorsque ladite première bascule monostable fournit une sortie pendant un passage dans ledit signal impulsionnel dans un sens opposé à celui de ladite première bascule monostable (27).

11. Appareil détecteur de mouvement selon la revendication 7, dans lequel ledit moyen de filtrage comprend un moyen redresseur (21) connecté à la sortie dudit moyen de filtre passe-bande (20) pour fournir sur une sortie un signal redressé, et un premier filtre passe-bas (22) ayant une première constante de temps et ayant une entrée connectée à ladite sortie dudit moyen redresseur (21) pour fournir sur une sortie ledit premier signal de sortie (3), et un second filtre passe-bas (23) ayant une constante de temps plus longue que ledit premier filtre passe-bas et ayant une entrée connectée à la sortie dudit moyen de filtre passe-bande (20) pour fournir sur une sortie ledit second signal de sortie.

12. Appareil détecteur de mouvement selon la revendication 9 ou 10, dans lequel ladite porte OU est une porte NI exclusif (26).

13. Appareil détecteur de mouvement selon la revendication 1, dans lequel ledit multiple entier de ladite fréquence de balayage vertical est deux fois ladite fréquence de balayage.
